# EUROPEAN PATENT APPLICATION

(11) **EP 1 876 400 A1**
(43) Date of publication of application: **09.01.2008**
(21) Application number: 06116649.2
(22) Date of filing: 05.07.2006
(51) Int. Cl.: F24J 2/10, F24J 2/38, F24J 2/02

(54) **Light concentrator and various apparatuses comrising such a concentrator**

(71) Applicant: Alff Engineering, 8915 Hausen am Albis (CH)
(72) Inventor: Alff, Jean-Jacques, 8915, Hausen am Albis (CH)
(74) Representative: OK pat AG

(57) **Abstract**

Concentrator for receiving parallel incoming light beams (L1) and reflecting the incoming light beams (L1) towards a target area (14). The concentrator comprises a transparent, flat reflecting element (11) having a substantially planar front side (12) and a structured back side (13). The structured back side (13) comprises a plurality of retro-reflecting surfaces being inclined with respect to the front side (12). Each of said retro-reflecting surfaces has a respective angle of inclination so as to reflect a part of said parallel incoming light beams (L1) and concentrate it in said target area (14).

## Description

### Field of the invention

The present invention concerns a light concentrator and various apparatuses comprising such a concentrator.

### Background of the invention

There are many applications where light is collected. In particular the collection of sun light is a task being addressed by many researchers and developers.

There are for instance so-called solar farms where a huge number of individual mirrors is employed in order to collect the incident sun light and to reflect or project this light onto a conversion unit where the energy of the sun light is exploited for heating purposes, or to generate electric current.

All concentrator-solutions which are known so far are either very complicated and expensive or simple but not very efficient. The efficiency, however, is a key aspect aspect since the high investments only pay off if such a solar farm can be produced, installed, and operated economically.

If one takes into consideration that the conventional sources for energy are limited, it becomes immediately obvious that any improvement in the collecting and exploiting of solar energy will increase the chances for the solar energy to be employed more widely.

Besides the above-mentioned solar farms, there is also a long felt need for improved solar systems that can be used in private households, or by individuals who do not have access to electricity. But for these kind of applications it is a must that the respective solar system be simple, robust and available at low cost.

It is thus an object of the present invention to provide a light concentrator that is simple and robust and that can be used to efficiently collect light (solar) energy.

It is a further objective of the present invention to provide apparatuses being enabled by such a concentrator.

It is a further objective of the present invention to improve or replace conventional solar farms.

### SUMMARY OF THE INVENTION

These disadvantages of known systems, as described above, are reduced or removed with the invention as described and claimed herein.

A concentrator in accordance with the present invention is claimed in claim 1. Various advantageous embodiments are claimed in claims 2 through 16. An apparatus that employs such concerntrators is claimed in claim 17. Various advantageous embodiments are claimed in claims 18 through 22.

According to the present invention, a concentrator is provided that can be used to receive parallel incoming light beams and to reflect the incoming light beams towards a target area. The concentrator, according to the invention, comprises a transparent, flat reflecting element having a substantially planar front side and a structured back side. The structured back side comprises a plurality of retro-reflecting surfaces which are inclined with respect to the front side. Each of the retro-reflecting surfaces has a respective angle of inclination so as to reflect and concentrate a part of the parallel incoming light beams in the target area.

The key element is the reflecting element. It can be produced (e.g. by embossing, grinding, cutting, moulding, extrusion) without having to invest too much energy and the reflecting element as such is very robust and easy to deploy. The reflecting element can be used to realize many different solutions where light, e.g. sun light, is collected and exploited in an efficient and thus economic fashion.

Special care was taken when designing the inventive reflecting element and applications which employ such reflecting elements in order to provide for an optimized efficiency. In this context the efficieny is regarded to be the ratio of the useable energy and the resources/energy used or consumed when making the respective reflecting elements. The resources and energy used include but are not limited to the expenditure and effort for the production, transport, installation, mainteance. Also considered is the recycling and wast disposal of old reflecting elements which are not needed anymore or which are defective. One further issue is the production yield, which in case of complicated and complex structures may have a remarkable impact on the production efficiency. Also important is the ease of use, size and weight and the robustness.

The actual conversion efficieny, i.e. the ratio of sun energy put to use with respect to the energy received is less important than the other aspects addressed before.

Further advantages of the present invention will be addressed in connection with the detailed description of specific embodiments.

### Brief description of the drawings

For a more complete description of the present invention and for further objects and advantages thereof, reference is made to the following description, taken in conjunction with the accompanying drawings, in which:
- FIGs 1a and 1b: are schematic illustrations of a first embodiment of the present invention,
- FIGs. 2a and 2b: are schematic illustrations of a second embodiment of the present invention;
- FIGs. 3a and 3b: are schematic illustrations of a third embodiment of the present invention;
- FIGs. 4a and 4b: are schematic illustrations of a fourth embodiment of the present invention;
- FIGs. 5a and 5b: are schematic illustrations of a fifth embodiment of the present invention;
- FIGs. 6a and 6b: are schematic illustrations of a sixth embodiment of the present invention;
- FIGs. 7a and 7b: are schematic illustrations of a seventh embodiment of the present invention;
- FIGs. 8a and 8b: are schematic illustrations of an eighth embodiment of the present invention;
- FIG. 9a: is a schematic cross-section of a flat reflecting element, in accordance with another embodiment of the present invention;
- FIG. 9b: is a schematic cross-section of a flat reflecting element, in accordance with yet another embodiment of the present invention;
- FIGs. 10a and 10b: are schematic illustrations of a ninth embodiment of the present invention;
- FIGs. 11a and 11b: are schematic illustrations of a tenth embodiment of the present invention;
- FIGs. 12a and 12b: are schematic illustrations of a twelfth embodiment of the present invention;
- FIG. 13: is a schematic view of an appartus, in accordance with another embodiment of the present invention;
- FIG. 14: is a schematic view of an appartus, in accordance with yet another embodiment of the present invention.

### DESCRIPTION OF PREFERRED EMBODIMENTS

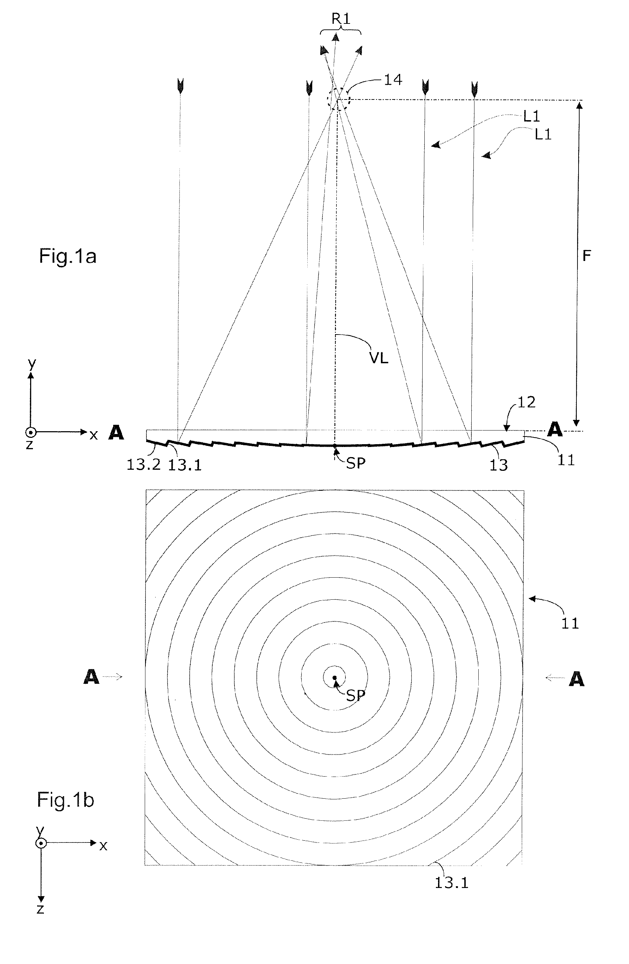

Before addressing detailed embodiments of the invention, the basic principle of the invention is described in connection with Figs. 1a and 1b. For the sake of simplicity, the same reference numbers are used throughout the specification for identical elements and elements having a similar or comparable funtion, even if these elements just serve the same purpose but are realized differently.

In Fig. 1a a cross-section of a first concentrator is shown. The concentrator comprises a transparent, flat reflecting element 11 that has a substantially planar front side 12 and a structured back side 13. The structured back side 13 is schematically illustrated by means of a bold black zig-zag line. The structured back side 13 comprises a plurality of retro-reflecting surfaces 13.2 which are inclined with respect to the front side 12. As illustrated in Fig. 1b, one retro-reflecting surface 13.2 is separated from the next retro-reflecting surface 13.2 by an intermediate surface 13.1. In other words, there typically is a series of a retro-reflecting surface 13.2, followed by an intermediate surface 13.1, followed by a retro-reflecting surface 13.2, and so forth.

The concentrator receives parallel incoming light beams L1 and reflects these incoming light beams L1 towards a target area 14. In Fig. 1a this target area 14 is indicated by means of a circle. For the purposes of the present invention the expression "target area" is used as synonym for a three-dimensional zone, since the concentrators presented herein are not designed with the intention to focus sun light into a single spot. It is rather an objective to provide for a certain blur or spread of the light intensity, as will become clearer from the description of the embodiments.

In order to ensure that the incident light beams L1 are reflected or projected into the target area 14, each of the retro-reflecting surfaces 13.2 has a respective angle of inclination. In the present embodiment, the retro-reflecting surfaces 13.2 in the middle of the flat reflecting element 11 have no or almost no inclination (i.e. the angle of inclination is zero or close to zero). This means that these surfaces 13.2 are perpendicular, or nearly perpendicular with respect to the incident light beams L1 and thus parallel or essentially parallel with respect to the front side 12 (provided that this front side 12 is a flat surface in the x-z plane). The retro-reflecting surface 13.2 just in the center SP of the reflecting element 11 in fact is perpendicular in the present example. The retro-reflecting surfaces 13.2 to the right and left of the center SP have an angle of inclination that increases with the distance from the center SP.

Please note that these general statements are only true in case where the target area 14 is above the center SP, as illustrated in Fig. 1b. If one wants the target area 14 to be right above the center SP, as illustrated in Figs. 1a and 1b, then the layout of the reflecting element 11 has a high degree of symmetry, preferably a symmetry with respect to the point SP. This is best understood when referring to Fig. 1b where the intermediate surfaces 13.1 and the retro-reflecting surfaces 13.2 are represented by concentric circles and rings, respectively, around the center SP.

According to this very specific embodiment, all parallel light beams L1 are reflected or projected into the target area 14.

In order to achieve a high optical efficency, that is a high ratio of the light energy arriving at the target area 14 divided by the light energy per surface area of the reflector 11 (i.e. the light energy of the incident light), the reflecting element 11 should be stiff. Any deflection or deviation of the position and orientation of the retro-reflecting surfaces 13.2 has an impact on the efficiency or the quality of the light concentration.

In Fig. 1a some additional aspects are shown in order to allow this embodiment to be described in more detail. The distance between the flat surface 12 and the center of the target area 14 (i.e., the center of the 3-dimensional sphere 14) is denoted by F. The virtual line connecting the center point SP and this center is denoted by VL. In this specific embodiment this line VL is perpendicular with respect to the front side 12.

The intermediate surfaces 13.1 do not have to be reflective, but in most embodiments the intermediate surfaces 13.1 are covered by or composed of the same reflective material as the retro-reflecting surfaces 13.2.

The reflecting elements 11 in accordance with the present invention are oriented so that the parallel incoming light beams L1 enter the reflecting element 11 through the front side 12 and travel through the body of the respective reflecting element 11 towards the back side 13. At or near the back side 13 the light beams L1 are reflected, travel again through the body of the reflecting element 11 and exit the reflecting element 11 through the front side 12. The retro-reflecting surfaces 13.2 of the back side 13 are structured and oriented so that the reflected light R1 converges towards the target area 14.

The front side 12 may be coated or treated in order to cope with the reflection of light entering the body of the element 11 or the internal reflection of light leaving the body through the front side 12. One may also chose materials which have an appropriate refractive index. These measures are optional.

Since the first embodiment was described in great detail, only those elements of the subsequent embodiments are described which are different or special.

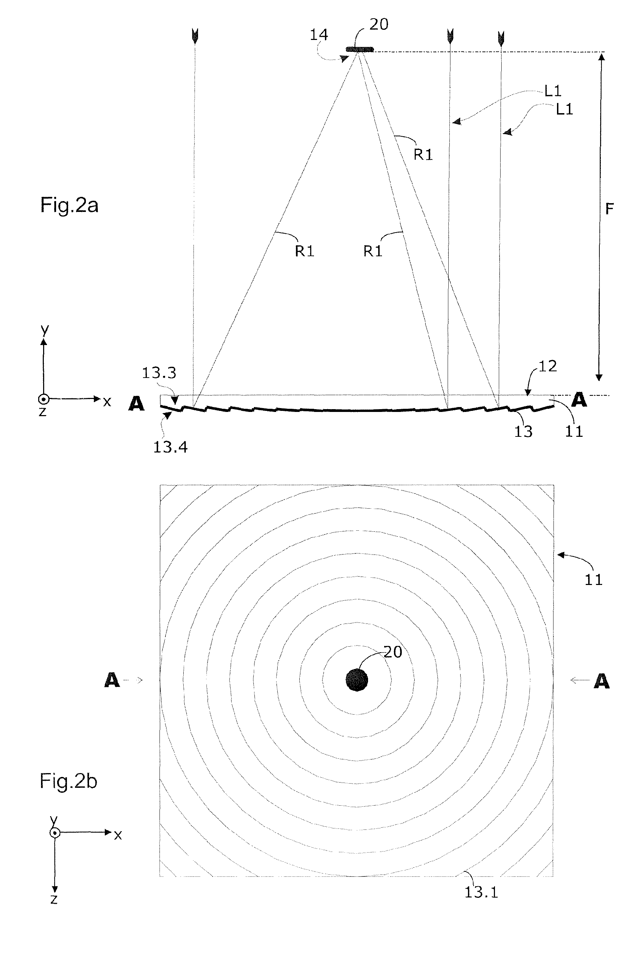

In Fig. 2a the cross-section of another embodiment is shown. The respective top view is given in Fig. 2b. The whole setup is similar to the one of Figs. 1a and 1b. The main difference is that there is a specific element 20 located at or close to the target area 14. The specific element 20 may be a light-to-energy converting means or a reflecting means. It is also possible to position light-to-energy converting means and reflecting means at or close to the target area 14. It is also possible to position another optical element, e.g. a lense or reflection element, at the target area 14. As illustrated in Figs. 2a and 2b, the specific element 20 in the present example has a lateral dimension in the x-z plane. Due to the fact that the specific element 20 has a certain lateral dimension, a large percentage of all reflected light beams can be collected.

Depending on the actual embodiment, an electro optical converter may serve as specific element 20. Typical examples are light sensitive elements or solar cells, or a combination of both. If an electro optical converter is employed, the reflected light R1 impinges on the converter and is converted into electrical energy.

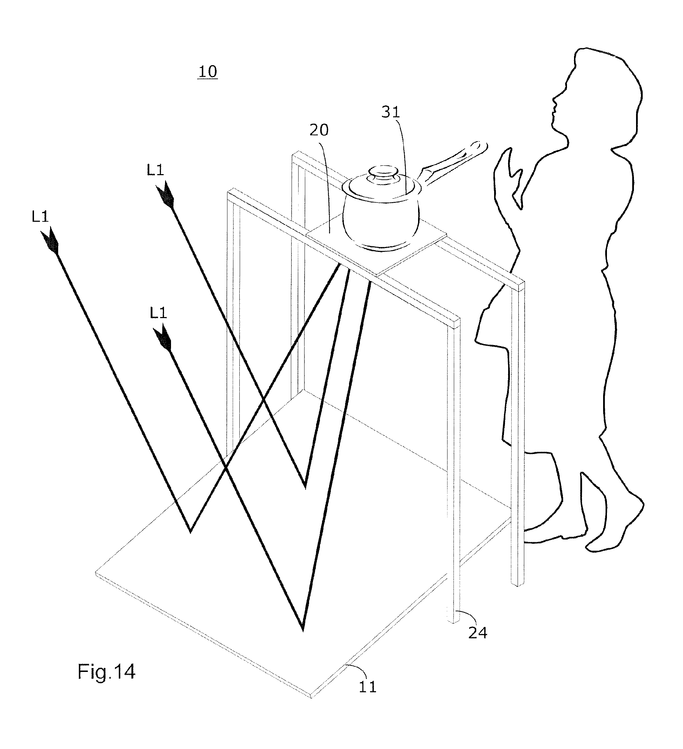

Instead or in addition to an electro optical converter, a pipe or some other liquid-containing means, e.g. a kettle 31 (cf. Fig. 14), may be located at the target area 14. Such a setup can be used to heat water or vapour, for instance.

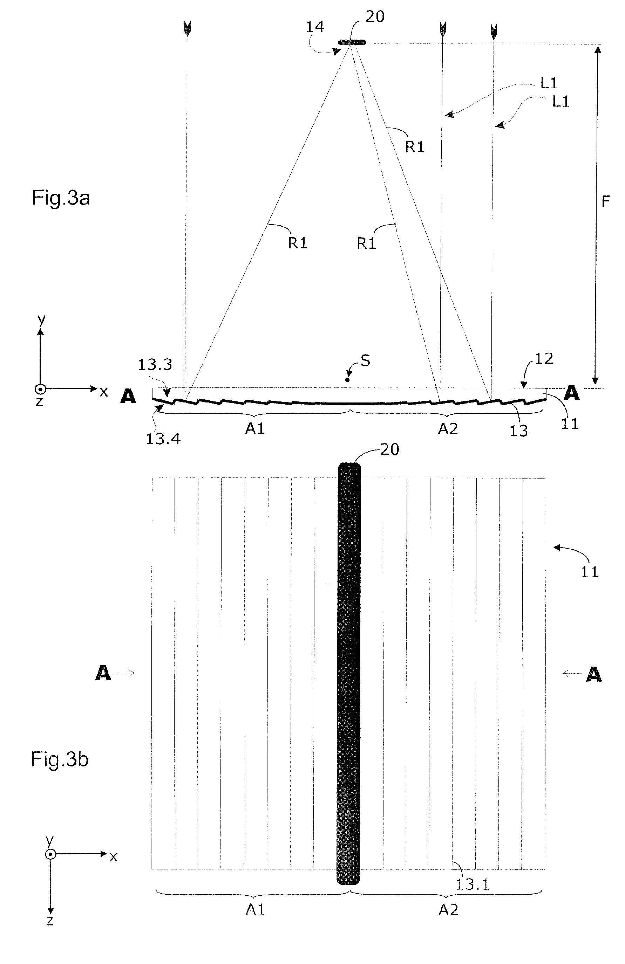

In Fig. 3a the cross-section of another embodiment is shown. The respective top view is given in Fig. 3b. The whole setup is similar to the one of Figs. 1a through 2b. The main difference is that the reflecting element 11 has at least one center line instead of a center point. This center line has a distance F with respect to the reflecting element 11 and extends parallel to the z-direction of the front side 12. Accordingly, the respective target area 14 is a longish 3-dimensional area (e.g. a drum-like area) and the specific element 20 expands parallel to the z-direction, as illustrated in Fig. 3b. The specific element 20 is located at or near the target area 14.

The concentrator of Figs 3a and 3b comprise retro-reflecting surfaces 13.2 on a first side A1 of a line of symmetry S and retro-reflecting surfaces 13.2 on a second side A2 of this line of symmetry S. The retro-reflecting surfaces 13.2 on the first side A1 are symmetrically arranged with respect to the retro-reflecting surfaces 13.2 on the second side A2. One can derive from Fig. 3b that the retro-reflecting surfaces 13.2 have lateral strip-like sections that extend essentially parallel with respect to the longish 3-dimensional target area 14.

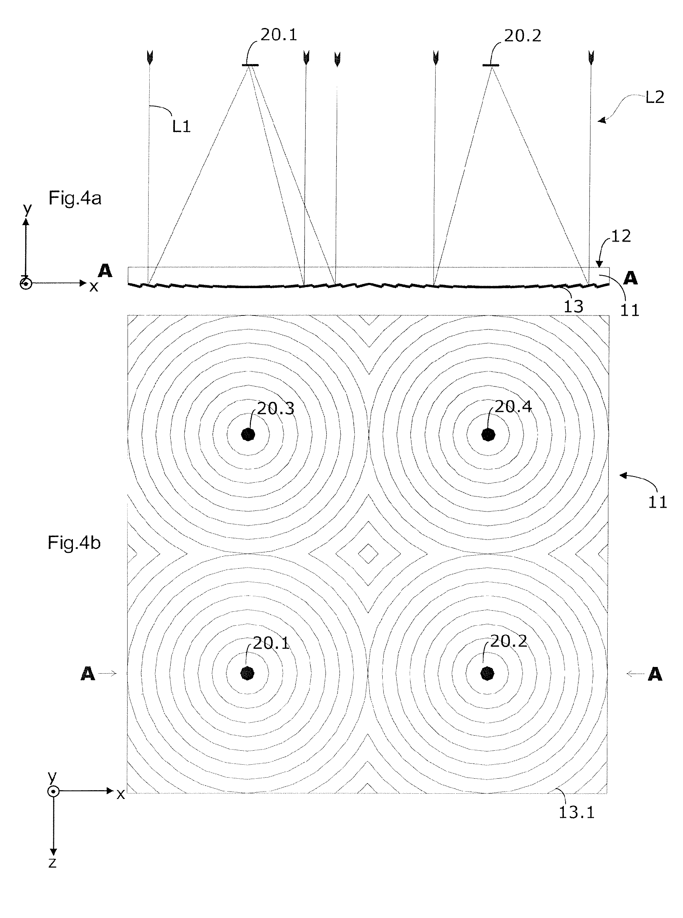

Yet another embodiment is depicted in Figs. 4a and 4b. The flat reflecting element 11 has several zones where each zone comprises a number of concentric retro-reflecting surfaces 13.2. Each zone has one corresponding central point and a corresponding active area enclosing said central point. Specific elements 20.1 through 20.4 are located at or near each of the active areas. As illustrated in Fig. 4a, light L1 that reaches the zone on the left hand side of Fig. 4a is reflected towards the element 20.1 and light L2 that reaches the zone on the right hand side of Fig. 4a is reflected towards the element 20.2.

The flat reflecting element 11 can be regarded as an array of several flat reflecting elements (zones). The reflecting element 11 of Figs 4a and 4b can be a monolithic element or it can be composed of individual (discrete) elements.

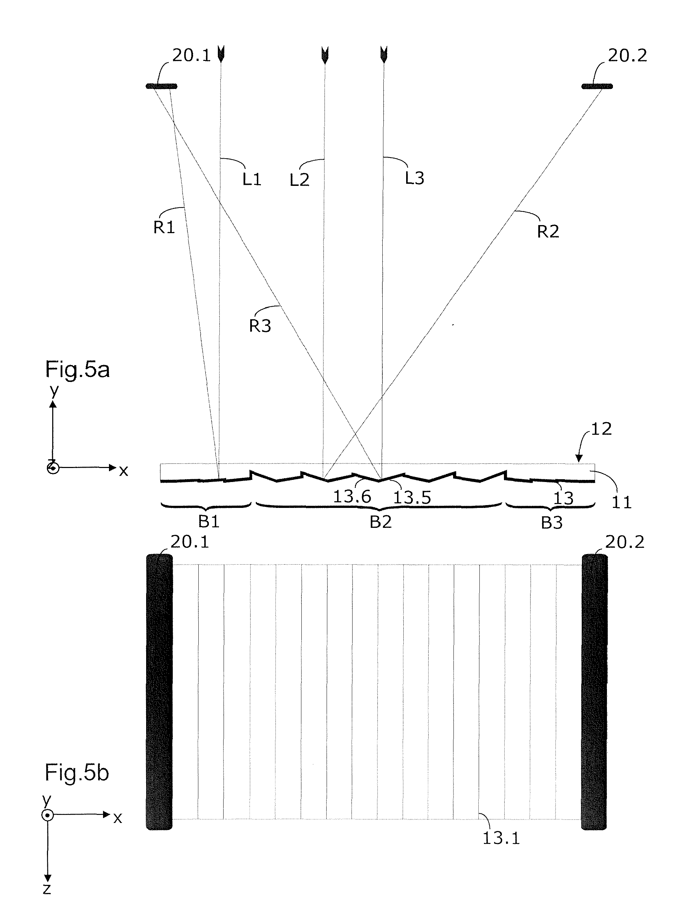

Yet another embodiment is depicted in Figs. 5a and 5b. The flat reflecting element 11 now has three different zones B1, B2, and B3 where each zone comprises a number of retro-reflecting surfaces. The zone B1 has a first corresponding center line and a first corresponding 3-dimensional strip-like active area. Light L1 hitting the zone B1 is reflected (beam R1) to the first target area on the left hand side. The zone B3 has a second corresponding center line and a second corresponding 3-dimensional strip-like active area so that light hitting the zone B3 is reflected to the second target areaon the right hand side. The respective said target areas are spaced apart. The zone B2 in the middle comprises a first set of retro-reflecting surfaces 13.5 which reflect incident light towards the first target area e and a second set of retro-reflecting surfaces 13.6 which reflect incident light towards the second target area. In other words, some of the light L3 hitting the zone B2 is reflected to the target area on the left hand side and some of the light L2 hitting the zone B2 is reflected to the target area on the right hand side. Note that the retro-reflecting surfaces of the zones B1 and B3 (outer zones) have angles of inclination being very small. This means that the respective retro-reflecting surfaces are only slightly tilted with respect to the x-z-plane. The retro-reflecting surfaces 13.5, 13.6 of the zone B2 typically have larger angles of inclination. In the zone B2 the typical alternating order of each retro-reflecting surface being followed by an intermediate surface, and so forth, is interrupted. As shown in Fig. 5a, two retro-reflecting surfaces may be connected, where one retro-reflecting surface 13.6 is tilted to the left and the next one 13.5 is tilted to the right.

Like in other embodiments, the specific elements 20.1 and 20.2 are located at or near each of the target areas.

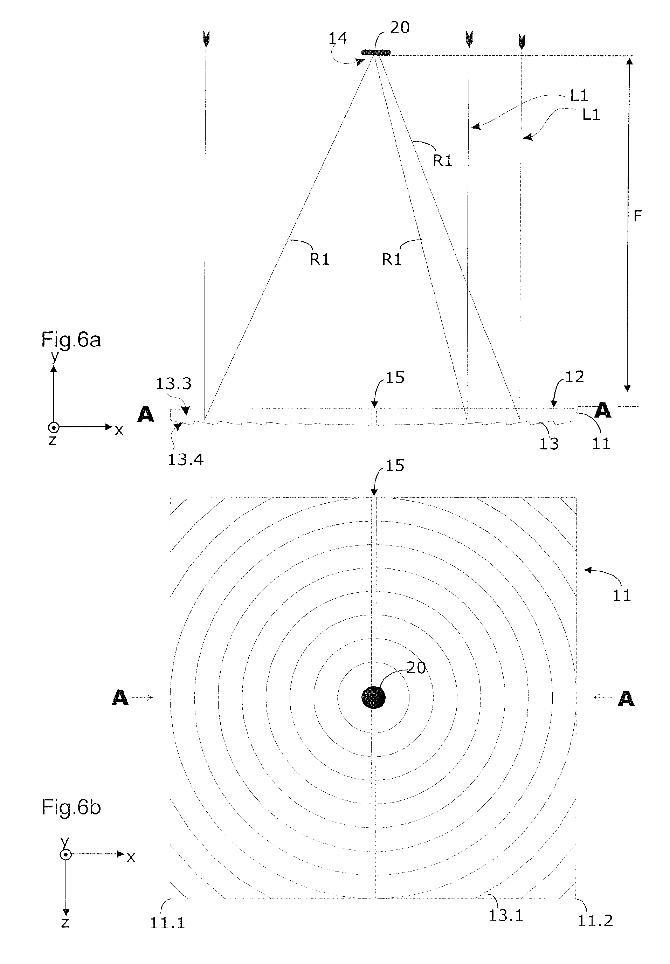

Yet another concentrator is illustrated in Figs. 6a and 6b. The reflecting element 11 comprises two or more subcomponents 11.1, 11.2 which are arranged adjacent to each other. There may be a gap 15 between adjacent subcomponents 11.1, 11.2. The reflecting element 11 may comprise a plurality of subcomponents 11.1, 11.2.

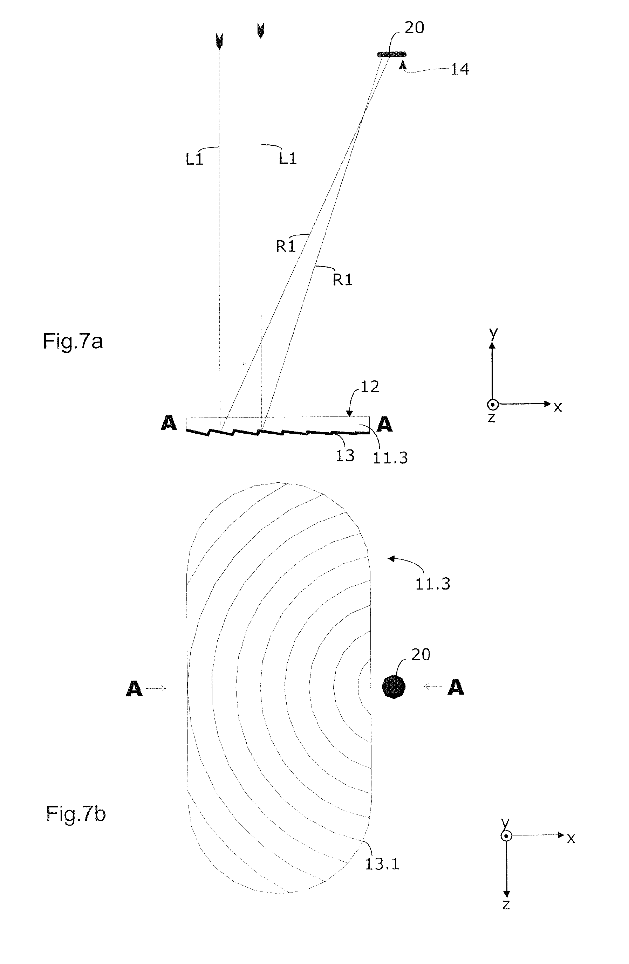

As illustrated in Figs. 7a and 7b, the reflecting element 11 may be a segment 11.3 or portion of an imaginary larger reflecting element 11. The segment 11.3 has an oval shape, but it can have almost any other shape.

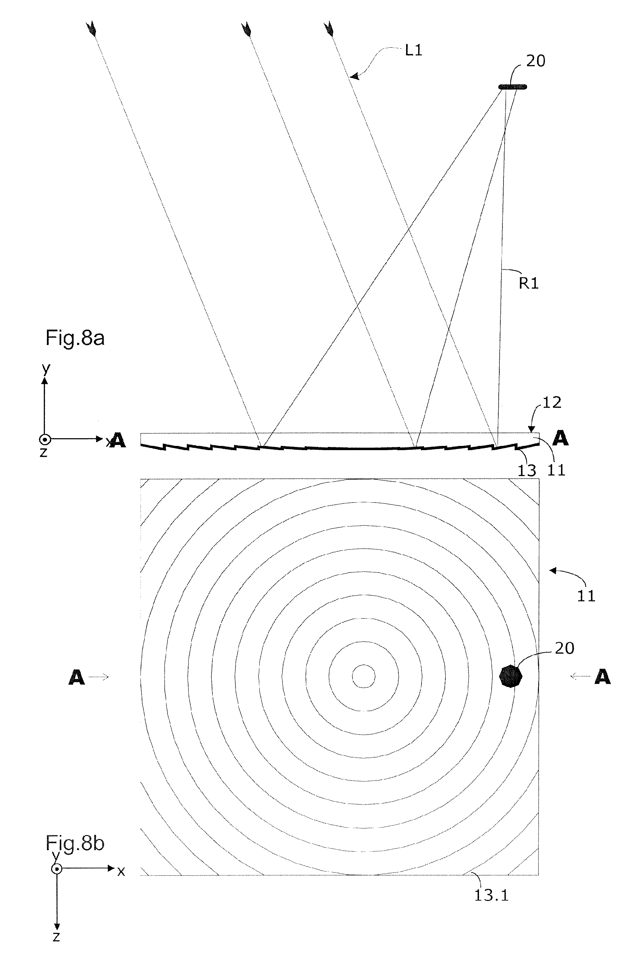

Yet another concentrator is illustrated in Figs. 8a and 8b. The reflecting element 11 has an asymmetric structure so that the target area is located somewhere near the periphery. Please note that the target area can even be somewhere besides the reflecting element 11 (called off-set arrangement). All incoming light beams L1 are reflected to the target area and a special element 20 may be placed at or close to this position.

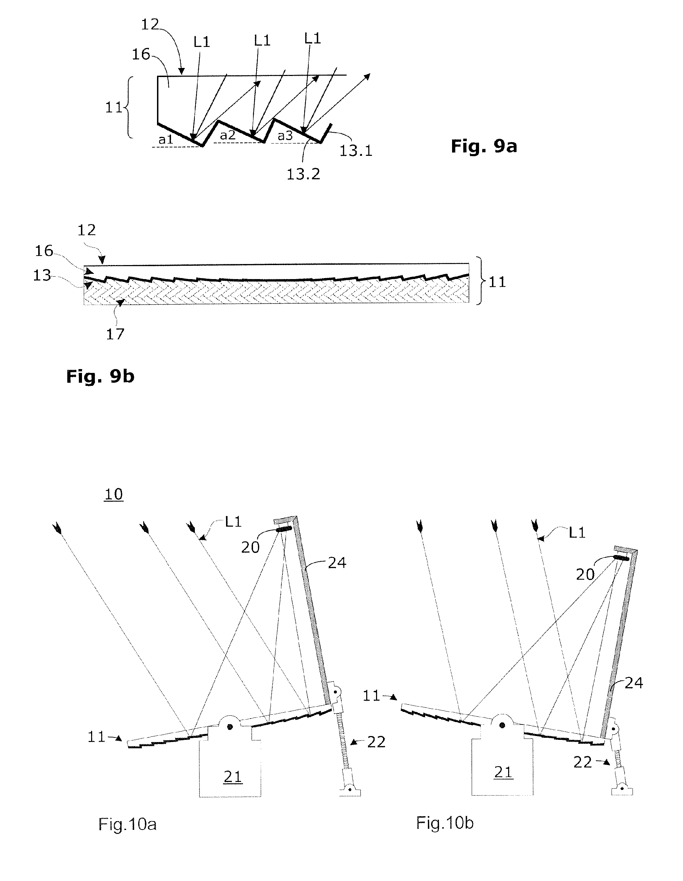

Before addressing further aspects and some implementation details of the invention, examples of cross-sections are given in Figs. 9a and 9b. In the most simple implementation, the reflecting element 11 basically comprise a flat body or plate 16 which is on one side delimited by the (front) surface 12 and on the other side by the retro-reflecting surfaces 13.2 and intermediate surfaces 13.1. In Fig. 9a a schematic cross-section of such an embodiment is shown in a magnified view. The intermediate surfaces 13.1 are steeper than the retro-reflecting surfaces 13.2. In an optimal embodiment, the projection of the intermediate surfaces 13.1 onto the x-z-plane results in very thin lines (see for instance the concentric circles 13.1 in Figs. 1b and 2b). The projection of the retro-reflecting surfaces 13.2 onto the same plane typically is visible as concentric rings (see for instance Figs. 1b and 2b), or parallel stripes (see for instance Figs. 3b and 5b), or the like. Since in most embodiments there is an alternating series of retro-reflecting surfaces 13.2 and intermediate surfaces 13.1, one tries to keep the areas of the intermediate surfaces 13.1 as small as possible compared to the areas of the retro-reflecting surfaces 13.2. The embodiment illustrated in Figs 1a through 9a have a so-called external back side. In other words, the reflecting surfaces are freely accessible from the backside. It is possible, however, to cover or protect this backside.

In a currently preferred embodiment the angles of all individual surfaces 13.1 and 13.2 are selected so that the optical efficiency of the reflecting element 11 is as high as possible, but the respective angles and the shape of the individual surfaces 13.1 and 13.2 can also be chosen so that the target area has a certain size and/or shape.

There is another aspect that is visible from Fig. 9a. If the target area 14 is on the right hand side above the reflecting element 11 of Fig. 9a (not visible) in this enlargement, then the angle of inclination of a retro-reflecting surface 13.2 closer to the outer periphery is larger than the one of a retro-reflecting surface 13.2 closer to the center of the reflecting element 11. In other words, the angle a1 is larger than the angle a2 and a2 is larger than a3, and so forth.

In Fig. 9b an embodiment is shown, where on the backside there is a support or mounting layer 17 or a frame. The backside thus is also referred to as internal backside (as compared to the external backside described above). This layer 17 or frame has a structured upper surface being provided with the negative structure of the backside 13. This structured upper surface may be covered or coated with a reflecting layer. Then the body 16 of the reflecting element 11 is deposited, formed or placed on top of the reflecting layer. Preferrably, the body 16 is realized such that its upper most surface (i.e. the surface 12) is substantially flat.

At least the body 16 of the reflecting element 11 has to be transparent and the interface at the surface 12 (air-body interface) has to be such that only a small percentage of light is reflected back without entering the body 16. As discussed above, the surface 12 thus may be coated or covered by an antireflection layer. One may also or in addition provide a protection layer against mechanical and chemical degradationThe layer 17 does not have to be transparent.

Very well suited are glass, quartz, resins, polyarcyl or glass-like materials to serve as transparent body 16. The reflecting layer or coating that is an essential part of the retro-reflecting surface 13.2 preferably comprises a metal or alloy. Very well suited are sputtered or electro-chemically deposited layers or coatings.

The thickness of the reflecting element 11 obviously depends on several factors, such as the distance between reflecting element 11 and target area, the size (width by length) of the reflecting element 11, and the materials used, just to mention some aspects that may have an impact on the thickness. Typically, the ratio of the thickness of the reflecting element 11 divided by the width (or length, whatever is appropriate) of the reflecting element 11 is 0,2 or smaller. If the reflecting element 11 of Fig. 1a has a width of 100 cm and a length of 100cm, then the thickness is 2cm or less.

In a currently preferred embodiment, a carrier 17 (also called frame) is used to give the whole structure stability, since any bending could blur the target area more than desired. It is also possible to embed fibers or organic chains into the body 16 to give the whole structure additional stiffness. This is preferably done so that the fibers or chains do not impact the optical efficiency of the reflecting element 11.

Various systems and devices employing one or more reflecting elements 11 according to the invention will now be described. Reference is made to the Figs. 10a through 14. These systems and devices are described in order to demonstrate how widely the invention can be used and how powerful the invention is.

In Figs. 10a and 10b an apparatus 10 is shown. The apparatus 10 comprises at least one reflecting element 11. The reflecting element 11 is carried by or mounted on swiveling means 21, 22. In the present example the swiveling means 21, 22 comprise a support 21 with an axel and a threaded rod 22 or a similar element that is attached to the periphery of the reflecting element 11. There is also a stud 24 or some other kind of pillar or frame that carries the light-to-energy converting and/or reflecting means 20. The stud 24 is attached to the reflecting element 11 or to some frame that carries the reflecting element 11. The swiveling means 21, 22 allow the reflecting element 11 to be tilted together with the stud 24 and the light-to-energy converting and/or reflecting means 20. In Fig. 10a, the light source (e.g. the sun) is on the left hand side above the apparatus 10. As the light source moves to the right, the apparatus 10 follows by performing a tilting or swiveling movement. This is done so that one is able to collect the parallel incoming light beams L1 even if the light source moves with respect to said apparatus 10.

An actuator or motor may be attached to or connected to the threaded rod 22. The actuator or motor drives a screw nut along said threaded rod 22, or the threaded rod 22 is rotated so that a screw nut is moved along the rod 22. The actuator or motor may be controlled via a feedback-loop to perform an automatic tracking.

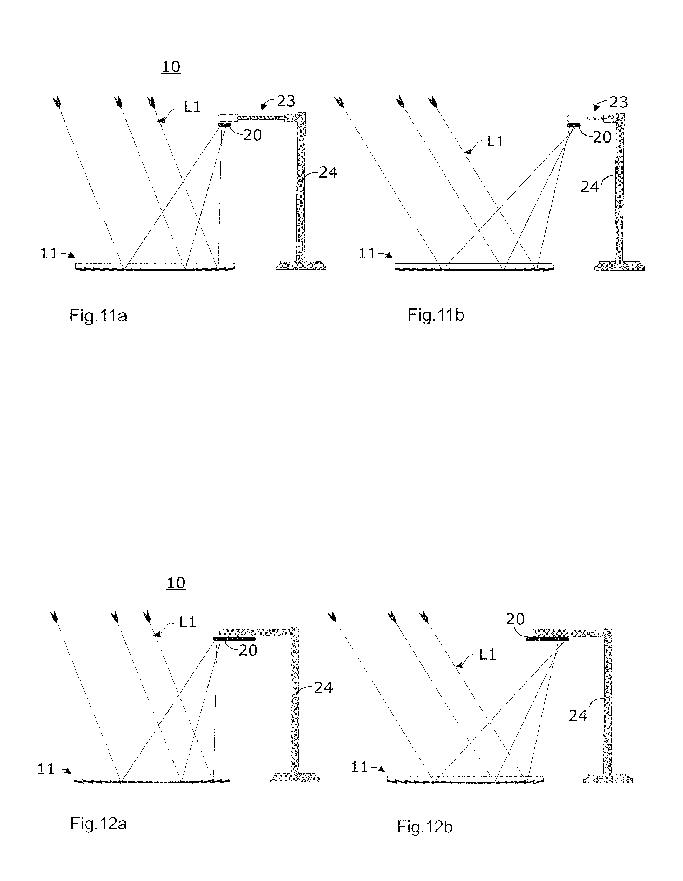

Another embodiment is illustrated in Figs. 11a and 11b. Neither the reflecting element 11 nor the stud 24 or other kind of pillar or frame are moved in any way. The tracking is done by moving the light-to-energy converting and/or reflecting means 20 to the left or right, as indicated in Figs. 11a and 11b. There can be a threaded rod 23 or some other element that performs the linear tracking movement. The necessary movement(s) may be controlled via a feedback-loop to perform an automatic tracking.

Another embodiment is illustrated in Figs. 12a and 12b. In this embodiment none of the elements are being moved. There is no tracking capability, but the size and position of the light-to-energy converting and/or reflecting means 20 is so that the reflected light always hits some part of it.

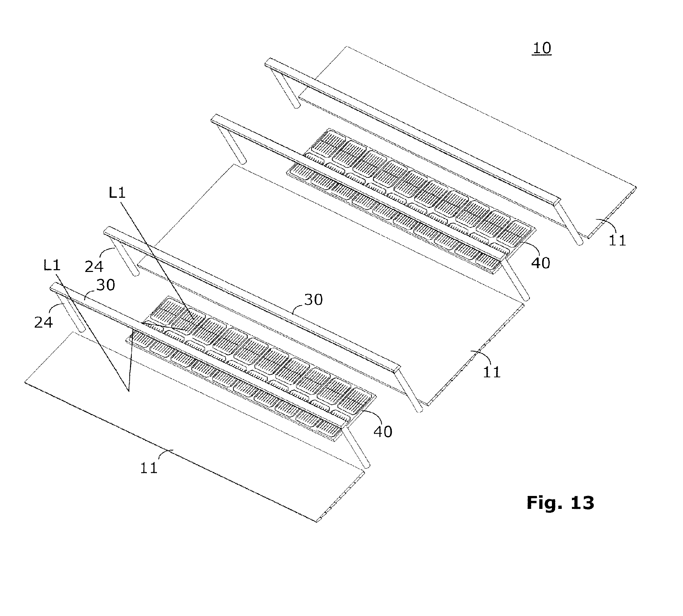

In Fig. 13 a perspective view of a new kind of solar farm 10 is shown. The solar farm 10 comprises a plurality of reflecting elements 11 and a number of solar cells 40 situated inbetween. There are frames or bridges 24 carrying reflectors 30. The frames or bridges 24 with the reflectors 30 are situated between the reflecting elements 11 and the solar cells 40. Note that the solar cells 40 in this embodiment are exposed to a lower light density then the reflectors 30. Sun light L1 hits the reflecting elements 11 and is concentrated or focused onto the reflectors 30. The reflectors 30 reflect the collected light onto the solar cells 40. The respective solar farm 10 is very robust since no moving elements are needed and it has a very high optical efficiency. But more importantly, its production, installation and maintenance is not very demanding and energy/resource consuming.

Last but not least another practical solution is presented. As illustrated in the corresponding Fig. 14, the reflecting element(s) 11 is/are on the ground floor and a kettle 31 is carried by a frame or bridge 24. Underneath the kettle 31 there is a light-to-energy converting element 20, for instance a black copper plate or the like, that absorbs the light and turns it into heat.

Depending on the intended application, the reflecting element 11 may be designed so that the target area has a pre-defined 2- or 3-dimensional geometry. In order to fulfil safety requirements and rules or regulations, a minimum size of the target area may be specified. This avoids that the light intensity gets too high causing for example eye damage or material degradation or fire hazard.

The retro-reflecting surfaces may be planar or slightly curved. In some embodiments, the respective surfaces are sections of a cone or paraboloid. If sections of a cone are used to define the 3-dimensional shape of the retro-reflecting surfaces, then the lateral dimension in the x-z plane of the respective target area is comparable to the lateral dimension of the projection of each of the retro-reflecting surfaces onto the x-z plane. If, however, paraboloid or similar sections are used, then each retro-reflecting surface in itself may have a concentrating function and the lateral dimension in the x-z plane of the respective target area is smaller than in case of cone-shaped retro-reflecting surfaces.

The dimensions of the retro-reflecting surfaces are related to the wavelength λ of the light to be reflected. The width w (parallel to the x-axis) of the retro-reflecting surfaces is many times larger than the respective wave length λ. Preferrably, w > 10 λ. In case of concentrators designed for the concentration of infrared or near-infrared light, e.g. with a maximum wavelength λ in the spectrum of 15µm, for instance, the width w may be typically between 0,15mm and 15mm. If the wavelength λ is shorter, e.g. λ =1 µm, then w may be 10 µm or more.

As discussed before, a feedback loop may be employed in order to allow the device or system to automatically follow the movements of the light source (sun). For this purpose the signal strength of a light converting element (e.g. an element 20 placed at or near the target area) may be used to determine when the reflected light is moving out of the area where the light converting element is situated.

Likewise, a control arrangement may be employed which is programmable or which allows the device or system to make pre-defined movements.

It is appreciated that various features of the invention which are, for clarity, described in the context of separate embodiments may also be provided in combination in a single embodiment. Conversely, various features of the invention which are, for brevity, described in the context of a single embodiment may also be provided separately or in any suitable subcombination.

In the drawings and specification there has been set forth preferred embodiments of the invention and, although specific terms are used, the description thus given uses terminology in a generic and descriptive sense only and not for purposes of limitation.

## Claims

1. Concentrator for receiving parallel incoming light beams (L1) and reflecting the incoming light beams (L1) towards a target area (14), **characterized in that** it comprises a transparent, flat reflecting element (11) having an essentially planar front side (12) and an internal or external structured back side (13), said structured back side (13) comprising a plurality of retro-reflecting surfaces (13.2; 13.5, 13.6) being inclined with respect to said front side (12), where each of said retro-reflecting surfaces (13.2; 13.5, 13.6) has a respective angle of inclination (a1, a2, a3) so as to reflect a part of said parallel incoming light beams (L1) and concentrate it in said target area (14).

2. The concentrator of claim 1, wherein said reflecting element (11) is oriented so that said parallel incoming light beams (L1) enter the reflecting element (11) through said front side (12) and travel through it towards said structured back side (13), where light beams (L1) are internally reflected and exit said reflecting element (11) through said front side (12) and converge towards said target area (14).

3. The concentrator of claim 1 or 2, wherein said reflecting element (11) has at least one target area (14) in front of said reflecting element (11), said target area (14) having a distance (F) with respect to said reflecting element (11).

4. The concentrator (10) of claim 3, wherein said target area (14) encloses a center point and wherein said structured back side (13) has a point of symmetry (SP), said point of symmetry (SP) and said center point being arranged on a virtual line (VL) being substantially perpendicular with respect to said front side (12).

5. The concentrator of claim 1 or 2, wherein said reflecting element (11) has at least one center line in front of said reflecting element (11), said center line having a distance (F) with respect to said reflecting element (11) and extending substantially parallel to one direction (z) of said front side (12) and wherein said target area (14) is a longish area located at or near said center line.

6. The concentrator of claim 5, wherein said structured back side (13) has a line of symmetry (S) parallel to said one direction (z) lying in a plane being substantially parallel to said front side (12).

7. The concentrator of claim 6, wherein said retro-reflecting surfaces (13.2) comprise retro-reflecting surfaces (13.2) on a first side (A1) of said line of symmetry (S) and retro-reflecting surfaces (13.2) on a second side (A2) of said line of symmetry (S) and where the retro-reflecting surfaces (13.2) on said first side (A1) are symmetrically arranged with respect to said retro-reflecting surfaces (13.2) on said second side (A2).

8. The concentrator of claim 5, wherein said reflecting element (11) has two parallel center lines in front of said reflecting element (11), said center lines preferably both having the same distance (F) with respect to said reflecting element (11) and both extending substantially parallel to said one direction (z), and wherein a first target area (14.1) is located at or near a first of said center lines and a second target area (14.2) is located at or near a second of said center lines.

9. The concentrator of claim 1 or 2, wherein said reflecting element (11)
- comprise two or more subcomponents (11.1, 11.2) which are arranged adjacent to each other, or
- is a segment (11.3) or portion of a reflecting element (11).

10. The concentrator of claim 1 or 2, wherein said retro-reflecting surfaces (13.2; 13.5, 13.6) of said reflecting element (11) are asymmetrically arranged and said target area (14) is located near to the reflecting element's (11) periphery or outside the reflecting element's (11) periphery.

11. The concentrator of one of the preceding claims, wherein said retro-reflecting surfaces (13.2; 13.5, 13.6) are covered or coated with a reflecting material, preferably a metal containing layer.

12. The concentrator of one of the preceding claims, wherein said structured back side (13) is stepped or terraced.

13. The concentrator of one of the preceding claims 1 through 11, wherein said structured back side (13) in a cross-section perpendicular to said front side (12) forms a zigzag line.

14. The concentrator of one of the preceding claims, wherein between adjacent retro-reflecting surfaces (13.2) there are intermediate surfaces (13.1) being more steeply inclined than said retro-reflecting surfaces (13.2).

15. The concentrator of claim 14, wherein said retro-reflecting surfaces (13.2) and intermediate surfaces (13.1) have a fan-folded structure.

16. The concentrator of one of the preceding claims, wherein said retro-reflecting surfaces (13.2; 13.5, 13.6) as such are planar or slightly curved.

17. An apparatus (10) comprising a concentrator according to one of the preceding claims and further comprising light-to-energy converting and/or reflecting means (20, 30) being arranged at or near said target area (14).

18. The apparatus (10) of claim 17, further comprising swiveling means (21, 22) for tilting said reflecting element (11) in order to be able to collect said parallel incoming light beams (L1) even if a source of said light beams (L1) moves with respect to said apparatus (10).

19. The apparatus (10) of claim 17, further comprising adjustable means (23) for moving said light-to-energy converting means (20) with respect to said reflecting element (11) in order to be able to collect said parallel incoming light beams (L1) even if a source of said light beams (L1) moves with respect to said apparatus (10).

20. The apparatus (10) of claim 17, wherein said light-to-energy converting means (20) have a pre-determined lateral extent in order to be able to collect said parallel incoming light beams (L1) even if a source of said light beams (L1) moves with respect to said apparatus (10), whereby said target area (14) moves along or across said light-to-energy converting means (20) when said source of said light beams (L1) moves with respect to said apparatus (10).

21. The apparatus (10) of one of the claims 17 - 20, wherein at least one electro optical converter, such as a light sensitive element or a solar cell (40), serves as light-to-energy converting means (20).

22. The apparatus (10) of one of the claims 17 - 19, wherein at least one pipe or other liquid containing means (31) serves as light-to-energy converting means (20).
